(19) Europäisches Patentamt
European Patent Office
Office européen des brevets

(11) Publication number: 0 174 373 B1

(12) EUROPEAN PATENT SPECIFICATION

(45) Date of publication of patent specification: 02.08.89

(51) Int. Cl.[4]: C 08 J 7/04, C 09 D 3/80, C 08 F 8/32

(21) Application number: 85901066.2

(22) Date of filing: 20.02.85

(86) International application number: PCT/JP85/00071

(87) International publication number: WO 85/03670 29.08.85 Gazette 85/19

# (54) PROCESS FOR PRODUCING HEAT-RESISTANT RESIN MOLDINGS HAVING EXCELLENT ABRASION RESISTANCE.

(30) Priority: 21.02.84 JP 31012/84
12.03.84 JP 46652/84

(43) Date of publication of application: 19.03.86 Bulletin 86/12

(45) Publication of the grant of the patent: 02.08.89 Bulletin 89/31

(84) Designated Contracting States: DE FR GB

(56) References cited:
JP-A-53 104 638
JP-A-54 016 599
JP-A-56 122 840
JP-A-58 005 306
US-A-4 246 374

(73) Proprietor: MITSUBISHI RAYON CO. LTD.
3-19, Kyobashi 2-chome Chuo-Ku
Tokyo 104 (JP)

(72) Inventor: SASAKI, Isao
1665-98, Onocho
Saiki-gun Hiroshima 739-04 (JP)
Inventor: NISHIDA, Kozi
2-2-202, Kurokawa 3-chome
Ohtake-Shi Hiroshima 739-06 (JP)
Inventor: MORIMOTO, Masaru
2-1, Kurokawa 3-chome
Ohtake-Shi Hiroshima 739-06 (JP)
Inventor: KUSHI, Kenji
2-6-101, Kurokawa 3-chome
Ohtake-Shi Hiroshima 739-06 (JP)

(74) Representative: Wright, Peter David John et al
R.G.C. Jenkins & Co. 26 Caxton Street
London SW1H 0RJ (GB)

EP 0 174 373 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to a process for producing heat-resistant molded resin articles with excellent abrasion resistance and, more particularly, it concerns a process for producing a molded resin article having a two-layer structure consisting of a base material of molded resin polymer with excellent heat resistance, and a crosslinking-cured coating layer excellent in abrasion resistance, surface smoothness, solvent resistance, durability and adhesiveness with the base material.

Polymers composed of 2% by weight or more of structural units of the formula (I)

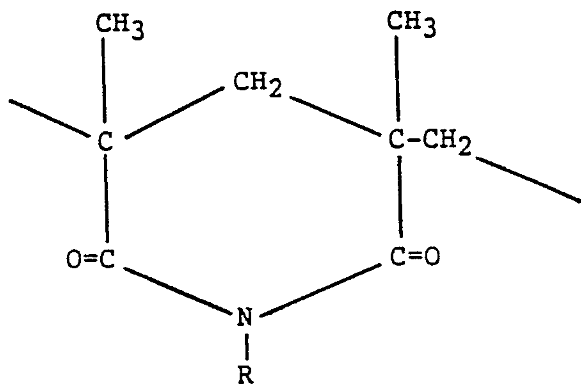

(I)

(wherein R is a hydrogen atom, an alkyl group, an aryl group or an alicyclic group of 1 to 20 carbon atoms) and 98% by weight or less of an ethylenic monomer unit, are characteristically thermoplastic and have excellent heat resistance (see published British Patent Application 2,101,139 and U.S. Patents 4,169,924 and 4,246,374).

However, because these polymers have insufficient resistance to surface abrasion, molded articles produced therefrom are affected by contact, impact and scratching during transportation, handling and use and consequently readily sustain damage to their surface or give reduced product yields or have deteriorated appearances.

Various methods for improving the inherent drawbacks of these synthetic molded resin articles have been investigated. Such methods include, for example, coating the surface of the molded article with a polyfunctional acrylate or methacrylate monomer as a crosslink-curable coating material, having two or more polymerizable, ethylenically unsaturated groups in one molecule, and then exposing the resulting coated article to active energy rays to form a crosslink-cured film on the surface of the molded synthetic resin article by radical polymerization.

Such polyfunctional (meth)acrylate monomers [(meth)acrylate implies acrylate or methacrylate and this definition is applied also hereinunder have excellent polymerization activity when exposed to active energy rays. Therefore, it has been proposed in U.S. Patents 3,661,614, 3,551,311 and 3,551,246 and UK Patent 1,198,259 to use these monomers as quick-drying inks. Further, the application of these polyfunctional (meth)acrylate monomers as a surface improver for molded synthetic resin articles has been proposed in U.S. Patents 3,552,986, 2,413,973, 3,770,490 and 4,199,421.

It has previously been found that multifunctional (meth)acrylate monomers are excellent in polymerizability by crosslink-curing when exposed to active energy rays and are an effective material for formation of a crosslink-cured film capable of improving the surface wear resistance of molded synthetic resin articles, (see, for example, Japanese Patent Publication Nos. 42,211/1973, 12,886,1974).

However, these materials for forming a crosslink-cured film are applied in most cases only to general-purpose base materials, and a plastics base material giving a crosslink-cured film having good adhesiveness is insufficient in heat resistance and a plastics base material having good heat resistance is insufficient in adhesiveness between plastics base materials and the crosslink-cured film.

The present invention seeks to produce molded resin articles having excellent abrasion resistance and which retain or do not sacrifice the heat resistance of the resin base material, and having a high degree of adhesion between the base material and the crosslink-cured film compared with conventional counterparts consisting of a general-purpose plastics base material and a crosslink-cured film provided thereon.

According to the invention, there is provided a process for producing a heat-resistant molded resin article with excellent adhesion between base material and cured film and excellent abrasion resistance, characterized by coating the surface of a molded resin article composed of

98% by weight or less of an ethylenic monomer unit, and

2% by weight or more of structural units of the formula (I)

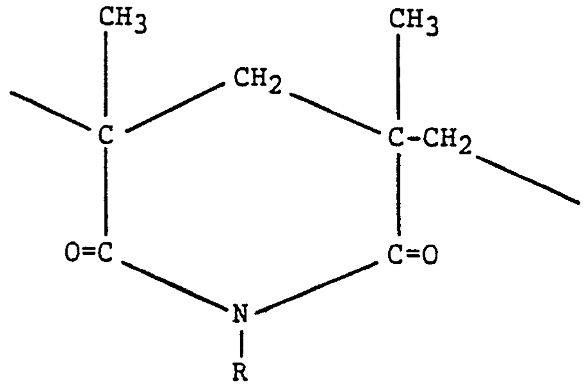

(I)

(wherein R is a hydrogen atom, a substituted or unsubstituted alkyl group, aryl group or alicyclic group of 1 to 20 carbon atoms) and consisting of a polymer obtained by reaction between a methacrylic resin and 1 to 200% by weight, based on the methacrylic resin, of a compound of the formula (II) or a urea compound which generates a compound of the formalu (II)

$$R—NH_2 \qquad (II)$$

(wherein R has the meaning specified above) at a temperature from 100°C to less than 350°C in the presence of at least one solvent selected from aliphatic alcohols and aromatic hydrocarbons, and then freeing the reaction mixture of volatile matter, with a crosslink-curable resin material containing 30% by weight or more of at least one monomer having three or more methacryloyloxy and/or acryloyloxy groups per molecule, and then exposing the coated article to active energy rays to form a cured film on the molded resin article.

The accompanying drawing is a flow sheet of a typical apparatus used for the production of a methacrylimide-containing polymer.

The base material polymer used in the production of the heat-resistant molded resin article is characterized by containing a unit of six-membered ring imide structure as mentioned above. The use of this imide unit results in the resin base material having excellent resistance to heat, moldability, productivity and mechanical properties when compared to conventional copolymer resins.

By forming a cured film of a crosslink-curable resin material composed of a monomer having three or more (meth)acryloyloxy groups per molecule on the surface of such a heat-resistant resin base material, the present invention provides a resin molded article having improved heat resistance and abrasion resistance in comparison with previous resin articles. In addition, the molded articles exhibit surprisingly strong adhesion between the base material and the cured film.

The polymer which forms the heat-resistant resin base material is a polymer or copolymer composed of 2% by weight or more of a unit of six-membered ring imide of the formula (I) and 98% by weight or less of an ethylenic monomer unit.

Of these components, the six-membered ring imide component is necessary in order for the heat-resistant resin base material to possess heat resistance, mechanical properties and strong adhesion to cured film.

2% by weight or more of the ring structural unit is required in the heat-resistant resin base material. In order to obtain distinct heat resistance and adhesion there is required 5% by weight or more, preferably 10% by weight or more. When the ring structural unit is present in an amount of less than 2% by weight, the resulting polymer does not provide the molded article with sufficient heat resistance and adhesion to the cured film. The N-substituent in the ring structure imide component is required to be a hydrogen atom, a non-substituted or substituted alkyl group, an aryl group, an alicyclic group having from 1 to 20 carbon atoms or a mixture of two or more of them. For improved heat resistance, the N-substituent is preferred to have a relatively short chain length. As the N-substituent, there are mentioned a hydrogen atom, a methyl group, an ethyl group, a propyl group, an isopropyl group, a butyl group, an isobutyl group, a tert-butyl group, a phenyl group, a substituted phenyl group, a cyclohexyl group and a bornyl group. Of these, a hydrogen atom and a methyl group are most preferable.

In producing the heat-resistant resin base material, a methacrylic resin and a compound of the formula (II)

$$R—NH_2 \qquad (II)$$

(wherein R is a hydrogen atom, a substituted or unsubstituted alkyl group, an aryl group or an alicyclic group of 1 to 20 carbon atoms) (this compound is hereinunder referred to as imidizing substance) are

reacted at a temperature from 100°C to less than 350°C in the presence a mixed solvent having a particular combination and then the resulting reaction mixture is freed of volatile matter. In the process of the invention, the imide unit of the formula (I) implies a methacrylimide ring and the above mentioned molded resin article containing this imide unit implies a methacrylimide-containing molded resin article. Accordingly, a methacrylimide-containing molded resin article implies a resin whose high molecular side chains contain methacrylimide segments. The methacrylic resin used in the invention is preferably a methyl methacrylate homopolymer or a copolymer of 25% by weight or more of methyl methacrylate and 75% by weight or less of an acrylate ester, a methacrylate ester, acrylic acid, methacrylic acid, styrene or α-methylstyrene having an intrinsic viscosity of 0.01 to 3.0. As the acrylate ester, there are mentioned, for example, methyl acrylate, ethyl acrylate, butyl acrylate, cyclohexyl acrylate, 2-ethylhexyl acrylate and benzyl acrylate.

As the methacrylate ester, there can be used ethyl methacrylate, butyl methacrylate, cyclohexyl methacrylate and benzyl methacrylate. These monomers can be used alone or in combinations of any two or more.

In order to obtain a methacrylimide-containing resin polymer, there are used two main process steps of imidization of the methacrylic resin and separation of volatile matter from the reaction mixture.

In the imidization step, a methacrylic resin and an imidizing substance are reacted to allow the high molecular side chains of the methacrylic resin to condense.

In the step of separation of volatile matter from the reaction mixture, the reaction mixture containing the imidized polymer formed during the imidization step is freed of volatile matter such as solvent.

In the imidization step, a methacrylic resin and an imidizing substance are reacted in the presence of a solvent. The reaction is preferably conducted after the methacrylic resin has been dissolved. As the preferable solvent, there can be mentioned alcohols such as methanol, ethanol, isopropyl alcohol and butyl alcohol and aromatic hydrocarbons such as benzene, xylene and toluene. A combination of methanol and an aromatic hydrocarbon compound such as benzene, xylene or toluene is preferable. The amount of solvent used is preferably small from a production standpoint; however, in order to carry out uniform imidization efficiently, it is preferred to use a solvent in such an amount that the concentration of polymer formed becomes 20 to 80% by weight.

As the imidizing substance, there are mentioned primary amines such as ammonia, methylamine, ethylamine and propylamine; compounds generating a primary amine when heated such as 1,3-dimethylurea, 1,3-diethylurea and 1,3-propylurea; and urea generating ammonia.

There are also mentioned aromatic amines such as aniline, toluidine and trichloroaniline, and alicyclic amines such as cyclohexylamine and bornylamine.

The amount of imidizing substance depends upon the proportion of methacrylic resin to be imidized but is in the range of 1 to 200% by weight based on the methacrylic resin. When the amount of less than 1% by weight, the resulting molded resin article possesses neither improved heat resistance nor improved adhesion with the cured film. The reaction between the methacrylic resin and the imidizing substance in a reactor is conducted at a temperature from 100°C to less than 350°C, preferably from 150°C to less than 350°C. When the temperature is less than 100°C, imidization of the methacrylic resin is slow. When the temperature is 350°C or more, decomposition of the methacrylic resin occurs. The reaction time is not particularly restricted; however, it is preferably relatively short from a productivity standpoint, a period from 30 min to 5 hr being preferred.

In the imidization of the methacrylic resin, the presence of a large amount of water causes hydrolysis of the ester portion (the methyl methacrylate segment), whereby it becomes difficult to produce a desired polymer containing methacrylimide groups. Hence, it is preferable to conduct this reaction under substantially water-free conditions, namely, where the water content is 1% by weight or less, preferably zero.

In the process of the invention, the amount of methacrylic resin to be imidized is optional but must be at least 2% by weight or more, particularly 5% by weight or more to provide the required heat resistance of the resulting heat-resistant resin and the required adhesion between the molded resin article produced from the heat-resistant resin and the cured film formed on the molded article.

The apparatus used in production of the methacrylimide-containing polymer is unimportant. For example, there may be used a plug flow type reaction apparatus, a screw extrusion type reaction apparatus, a column-shaped reaction apparatus, a tube type reaction apparatus, a duct-shaped reaction apparatus or a tank type reaction apparatus. For uniform imidization, however, there is preferably used a tank type reaction apparatus having inlets for raw materials, an outlet for reaction mixture and a stirring means enabling stirring throughout the apparatus.

In the step of separating volatile matter from the reaction mixture, the reaction mixture containing the condensation product formed by reaction between the methacrylic resin and the imidizing substance is freed from most volatile matter, so that the content of residual volatile matter in the final polymer is reduced to 1% by weight or less, preferably 0.1% by weight or less. The removal of volatile matter can be conducted using a vent extruder or a devolatizer, or by using other methods for example, wherein the reaction mixture is diluted with a solvent, added to a large amount of an immiscible medium to precipitate the reaction product, and then the reaction product is filtered and dried.

A typical apparatus used in the production of the methacrylimide-containing polymer is described below with reference to the accompanying drawing.

A solvent for imidization is passed from a solvent storage tank 1 to a solvent supply tank 4 through a line 2 by a pump 3. An anti-oxidant is supplied as necessary from an anti-oxidant storage tank 5 to the solvent supply tank 4 through a line 6 and is dissolved in the solvent. Then, the solvent is sent to a resin dissolution tank 10. A resin is supplied from a resin pellet storage tank 8 to the resin dissolution tank 10 through a line 9.

The resin dissolution tank 10 is equipped with a stirrer 11 and a jacket 12. In the jacket, a heat transfer medium flows through openings 13 and 14. The dissolved resin in the resin dissolution tank 10 is sent to a reaction tank 20 through a discharge line 15, a pump 16 and a line 17. In the reaction tank 20, the dissolved resin is reacted with an imidizing agent supplied from an imidizing agent storage tank 18. The reaction tank 20 is equipped with a spiral ribbon type stirrer 21 and a jacket 22 and in the jacket a heat transfer medium flows through openings 23 and 24. The reaction mixture formed in the reaction tank 20 is sent to an aging tank 28 through a discharge line 25, a pump 26 and a line 27. The aging tank 28 is equipped with a spiral ribbon type stirrer 29 and a jacket 30 and in the jacket a heat transfer medium flows through openings 31 and 32. The aged reaction mixture is sent to a volatile matter separator 36 through a discharge line 33, a pump 34 and a line 35 to remove volatile matters. The resulting reaction product is discharged from 37.

The volatile matter separator 36 is equipped with a screw 38, a vent 39 and a heating means 40.

The methacrylimide-containing polymer obtained from the volatile matter separator in a strand form can be subjected to pelletizing and injection molding to obtain a molded resin article base material.

In preparation of a methacrylic polymer as a raw material for the polymer of methacrylimide ring structure, there can be used an ordinary polymerization process such as a radical polymerization process or an ion polymerization process. A radical polymerization process is preferable from a productivity standpoint.

The polymerization catalyst used for obtaining the above polymer can be selected from for example, azobis type catalysts such as azobisisobutyronitrile and 2,2'-azobis(2,4-dimethylvaleronitrile); diacyl peroxide type catalysts such as lauroyl peroxide, benzoyl peroxide and bis(3,5,5-trimethylhexanoyl) peroxide; and percarbonate type catalysts.

In order to prevent thermal degradation of the polymer during its production with heating, it is possible to add a thermal degradation inhibitor such as an anti-oxidant.

As the anti-oxidant there can be mentioned phosphite type anti-oxidant, hindered phenol type anti-oxidants, sulfur type anti-oxidants and amine type anti-oxidants.

The phosphite type anti-oxidants include tricresyl phosphite, cresyl phenyl phosphite, tri-n-butylphosphite and tributoxyethyl phosphite.

The hindered phenol type anti-oxidants include hydroquinone, cresol and phenol derivatives.

The sulfur type anti-oxidants include alkyl mercaptans and dialkyl disulfide derivatives.

The amine type anti-oxidants include naphthylamine, phenylenediamine and hydroquinoline derivatives.

On the surface of the heat-resistant resin molded article, there is formed a cured film of a crosslink-cured resin material, to provide the molded resin article with excellent abrasion resistance.

As the crosslink-curable resin material, there can be used various materials having crosslink-curable groups in one molecule. In view of abrasion resistance, adhesion with the plastics base material and transparency, the crosslink-curable resin materials containing 30% by weight or more of at least one monomer having three or more (meth)acryloyloxy groups as crosslink-curable unsaturated group within the molecule are used.

As the monomer having three or more acryloyloxy and/or methacryloyloxy groups in one molecule, there can be mentioned polyacrylates or polymethacrylates of polyhydric alcohols such as trimethylolpropane triacrylate or trimethacrylate, trimethylolethane triacrylate or trimethacrylate, pentaglycerol triacrylate or trimethacrylate, pentaerythritol triacrylate or trimethacrylate, pentaerythritol tetraacrylate or tetramethacrylate, glycerine triacrylate or trimethacrylate, dipentaerythritol triacrylate or trimethacrylate, dipentaerythritol tetraacrylate or tetramethacrylate, dipentaerythritol pentaacrylate or pentamethacrylate, dipentaerythritol hexaacrylate or hexamethacrylate, tripentaerythritol tetraacrylate or tetramethacrylate, tripentaerythritol pentaacrylate or pentamethacrylate, tripentaerythritol hexaacrylate or hexamethacrylate and tripentaerythritol heptaacrylate or heptamethacrylate; saturated or unsaturated polyester polyacrylates or polymethacrylates obtained from compound combinations such as malonic acid/trimethylolethane/acrylic acid or methacrylic acid, malonic acid/trimethylolpropane/acrylic acid or methacrylic acid, malonic acid/glycerine/acrylic acid or methacrylic acid, malonic acid/pentaerythritol/acrylic acid or methacrylic acid, succinic acid/trimethylolethane/acrylic acid or methacrylic acid, succinic acid/trimethylolpropane/acrylic acid or methacrylic acid, succinic acid/glycerine/acrylic acid or methacrylic acid, succinic acid/pentaerythritol/acrylic acid or methacrylic acid, adipic acid/trimethylolethane/acrylic acid or methacrylic acid, adipic acid/trimethylolpropane/acrylic acid or methacrylic acid, adipic acid/pentaerythritol/acrylic acid or methacrylic acid, adipic acid/glycerine/acrylic acid or methacrylic acid, glutaric acid/trimethylolethane/acrylic acid or methacrylic acid, glutaric acid/trimethylolpropane/acrylic acid or methacrylic acid, glutaric acid/glycerine/acrylic acid or methacrylic acid, glutaric acid/pentaerythritol/acrylic acid or methacrylic acid, sebacic acid/trimethylolethane/acrylic acid or methacrylic acid, sebacic acid/trimethylolpropane/acrylic acid or methacrylic acid, sebacic acid/glycerine/acrylic acid or methacrylic acid, sebacic acid/pentaerythritol/acrylic acid or methacrylic acid, fumaric acid/trimethylolethane/acrylic acid or methacrylic acid, fumaric acid/trimethylolpropane/acrylic acid or methacrylic acid, fumaric acid/glycerine/acrylic acid or methacrylic acid, fumaric acid/pentaerythritol/acrylic acid or methacrylic acid, itaconic acid/trimethylolethane/acrylic acid or methacrylic acid, itaconic acid/trimethylolpropane/acrylic acid or methacrylic acid, itaconic acid/pentaerythritol/acrylic acid or methacrylic acid, maleic anhydride/trimethylolethane/acrylic acid or methacrylic acid and maleic anhydride/glycerine/acrylic acid or methacrylic acid; urethane(meth)acrylates obtained by reacting 1 mole of a polyisocyanate [e.g. trimethylolpropane toluylene diisocyanate, a polyisocyanate of the formula

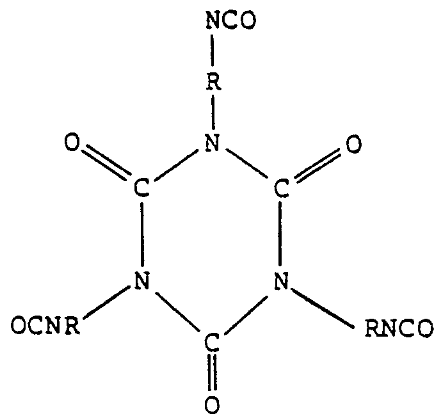

(wherein R is hexamethylene diisocyanate, tolylene diisocyanate, diphenylmethane diisocyanate, xylylene diisocyanate, 4,4′-methylenebis(cyclohexylisocyanate), isophorone diisocyanate or trimethyl hexamethylene diisocyanate)] with at least 3 moles of (meth)acrylic monomer containing active hydrogen (e.g. 2-hydroxyethyl acrylate or methacrylate, 2-hydroxypropyl acrylate or methacrylate, 2-hydroxy-3-methoxypropyl acrylate or methacrylate, N-methylolacrylamide or N-methylolmethacrylamide, N-hydroxyacrylamide or N-hydroxymethacrylamide) according to an ordinary method; and poly[(meth)acryloyloxyethyl] isocyanurates such as triacrylate or trimethacrylate of tris-(2-hydroxyethyl)-isocyanuric acid.

Particularly preferable as the monomer having three or more (meth)acryloyloxy groups within the molecule are compounds of the formula

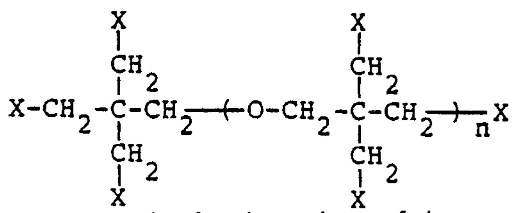 (III)

wherein *n* is an integer from 1 to 4, each of at least three of the groups X is $CH_2{=}CH{-}COO{-}$ or $CH_2{=}C(CH_3)COO{-}$, and each of the remainder (if any) of the groups X is $-OH$.

Specific examples of the monomers (III) include dipentaerythritol tri(meth)acrylate, dipentaerythritol tetra(meth)acrylate, dipentaerythritol penta(meth)acrylate, dipentaerythritol hexa(meth)acrylate, tripentaerythritol tri(meth)acrylate, tripentaerythritol tetra(meth)acrylate, tripentaerythritol penta(meth)acrylate and tripentaerythritol hexa(meth)acrylate. These monomers are easily cured by irradiation with active energy rays, not only in an atmosphere of an inert gas such as nitrogen or argon but also in air and form a film of excellent abrasion resistance; therefore, these monomers are particularly preferable.

By using a crosslink-curable resin material consisting of at least one of the above monomers, there can be obtained a crosslink-cured film with excellent surface smoothness and film uniformity and accordingly there can be easily produced a cured plastic film with a smooth surface. This cured film made of the above crosslink-curable resin material is excellent in abrasion with a plastic base material; therefore, there occurs no peeling of the cured film during use.

Together with the monomer having three or more (meth)acryloyloxy groups in one molecule, other monomers can be used. These other monomers have two or less (meth)acryloyloxy groups within the molecule and include, for example, 2,2-bis(4-acryloxydiethoxyphenyl)propane, 2,2-bis(4-methacryloxyethoxyphenyl)propane, diethylene glycol di(meth)acrylate, triethylene glycol di(meth)acrylate, tetraethylene glycol di(meth)acrylate, 2-hydroxyethyl (meth)acrylate, tetrahydrofurfuryl (meth)acrylate and ethylcarbitol (meth)acrylate. These monomers are used alone or in combination in the crosslink-curable resin material in an amount of 70% by weight or less.

In order to form on the surface of the heat-resistant resin polymer base material, a cured film of a crosslink-curable resin having a film thickness of about 1 to 30 μm and strong adhesion to that surface, it is

desirable to coat the crosslink-curable resin material onto the required surface parts of the heat-resistant resin polymer base material according to a known method such as spray coating, casting coating or dip coating and then to expose the resulting coating to active energy rays for crosslinking and curing.

As the active energy rays, there can be used electron beams and ultraviolet rays. The use of ultraviolet rays is advantageous from standpoints of operation and handling. When ultraviolet rays are used as the active energy rays, it is preferable to add a photoinitiator and/or a photosensitizer to the crosslink-curable resin material.

It is particularly preferable that the polyfunctional acrylate of the formula (III) is used in combination with a compound of the formula (IV)

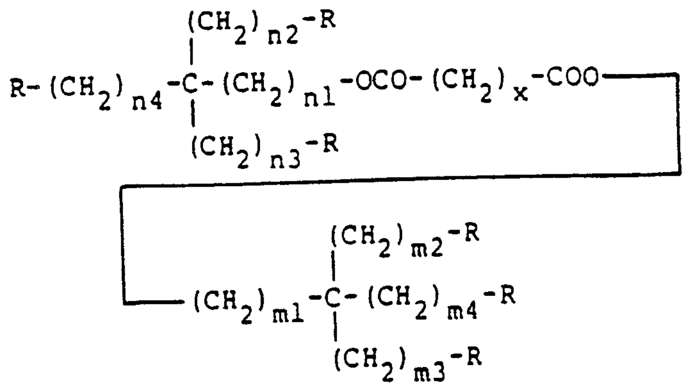

(IV)

(wherein each of at least three of the groups R is $CH_2$=CH—COO—, each of the remainder (if any) of the R's is a hydrogen atom, a hydroxyl group, an amino group, an alkylene group or a substituted alkylene group, each of $n_1$, $n_2$, $n_3$, $n_4$, $m_1$, $m_2$, $m_3$ and $m_4$ is 0, 1 or 2, and $x$ is an integer from 1 to 10), for example, one of the esterification products synthesized from such compound combinations as malonic acid/trimethylolethane/acrylic acid, malonic acid/trimethylolpropane/acrylic acid, succinic acid/trimethylolethane/acrylic acid, succinic acid/trimethylolpropane/acrylic acid, adipic acid/trimethylolethane/acrylic acid and adipic acid/trimethylolpropane/acrylic acid, in a proportion of compound (III)/compound (IV) = 5 to 1/5, because the resulting molded article then has excellent weather resistance and particularly does not change appearance, such as acquire a roughened surface as a result of accelerated or natural spraying and does not crack or suffer film peeling or poor adhesion.

The heat-resistant molded resin article also exhibits excellent surface smoothness, chemical resistance, durability and adhesion after heating.

Such a heat-resistant molded resin article can be used in various applications, for example, as screens for CRTs, screens for TVs, displays such as taxi meter and digital display panels, illumination optics, screens for fluorescent display tubes, screens for liquid crystals and the like, and further in applications such as covers for automobile headlights. Thus, the molded articles have a very high industrial significance and value as products capable of responding to the progress of car electronics.

The features and effects of the invention, will be explained in more detail in the following Examples. Parts and % used in the Examples are parts by weight and % by weight unless otherwise specified.

Measurements and evaluations in the Examples were made in accordance with the following methods.

(1) Abrasion resistance

(a) Surface hardness: Pencil hardness in accordance with JIS 5651—1966.

(b) Damage test: A damage test using #00 steel wool.

(2) Adhesion

Crosscut peeling test for crosslink-cured film using cellophane adhesive tape

11 lengthwise cut lines and 11 breadthwise cut lines are drawn on a cured film so that the cut depth of each line reaches the base material and two adjacent lines are 1 mm apart to form 100 divisions each of 1 $mm^2$ on the cured film. A cellophane adhesive tape is stuck onto this area and is peeled off rapidly.

This tape operation is repeated 30 times at the same place.

Adhesion after heating

A molded resin article provided with a crosslink-cured film was heated for 15 h at 120°C in a dry and hot constant temperature oven and then subjected to the crosscut peeling test using cellophane adhesive tape as described above, and repeated 30 times.

Example 1

In a 500 l dissolution tank were placed 100 parts of a sufficiently dried methyl methacrylate polymer having an intrinsic viscosity of 0.51, [produced by Mitsubishi Rayon Co., Ltd.], 90 parts of toluene

(dehydrated, dried and refined) and 10 parts of methanol (dehydrated and dried) which were subjected to stirring and dissolution at 80°C. The resulting solution was continuously supplied to a reaction tank at a rate of 5 kg/hr and the temperature inside the tank was controlled at 230°C while stirring the solution at 90 rpm. Then, methylamine (dried, filtered and refined) was continuously supplied to the reaction tank at the rate of 30 mole/hr and the pressure inside the tank was controlled at 2.5 MPa (25 kg/cm$^2$). The temperature inside the reaction tank was controlled at 230°C during reaction and an average residence time of 4.5 hr was employed. The reaction mixture was then removed from the reaction tank and sent to an aging tank by a pump, where aging was conducted with sufficient stirring using an average residence time of 2.0 hr at a tank temperature of 230°C.

The aged reaction mixture was continuously supplied to a vent type extruder to separate and remove volatile matter. In the vent extruder, the temperature of the vent portion was kept at 230°C, that of the extrusion portion was kept at 230°C and the vacuum of the vent portion was kept at 1.2 kPa (9 mmHg).

The strands extruded from the die were water-cooled and then cut to obtain a polymer of good transparency in pellet form. Toluene, methanol and unreacted methylamine discharged from the vent portion were cooled and recovered. The infrared absorption spectrum of the polymer showed absorptions inherent of N-methylmethacrylimide, at 1,770, 1,660 and 750 cm$^{-1}$.

The polymer had a MI of 3.5 (230°C, 3.8 kg load), a refractive index of 1.536, a specific gravity of 1.210 and a heat distortion temperature of 175°C.

Next, this polymer was subjected to extrusion molding by the use of a vent type extruder of 25 mm diameter manufactured by Daiichi Jitsugyo K.K. (die temperature: 230°C, adapter temperature: 230°C, screw barrel temperature: 200°C to 230°C, screw L/D=24) and then pelletized. From the resulting pelletized polymer were produced heat-resistant flat molded plates 80 mm × 80 mm × 2 mm by the use of a 28 g (1 ounce) vertical injection molding machine of screw type. These plates had a pencil hardness of 2H. The plates were subjected to the damage test using steel wool, in which they showed severe damage on the surface by light rubbing.

Onto the surfaces of the above molded resin plates were uniformly dip-coated a crosslink-curable resin material consisting of 30 parts of dipentaerythritol pentaacrylate, 30 parts of dipentaerythritol hexaacrylate, 20 parts of dipentaerythritol tetraacrylate, 20 parts of 2-hydroxyethyl acrylate and 4 parts of benzoin ethyl ether, using 200 parts of an isopropanol-toluene (6/4) mixed solvent. Then, the coated surfaces were exposed to ultraviolet rays emitted from a high pressure mercury lamp and were used.

The heat-resistant resin plates obtained had on the surface a crosslink-cured film of about 3 µm thickness and were almost undamaged when subjected to the damage test using #00 steel wool, and showed excellent abrasion resistance.

The crosslink-cured film was very hard, had excellent adhesion to the base material and gave a very good result in the crosscut peeling test using cellophane adhesive tape. The film had a very good mirror-like surface smoothness.

In the test for adhesion after heating, the base material showed no change and remained good and there was no change in the surface smoothness of the film.

Comparative Example 1

From a sufficiently dried methyl methacrylate polymer having an intrinsic viscosity of 0.51 [produced by Mitsubishi Rayon Co., Ltd.] were produced flat molded plates 80 mm × 80 mm × 2 mm by the use of a 28 g (1 ounce) vertical injection molding machine of the screw type.

The molded plates had a pencil hardness of 2H. The plates were subjected to the damage test using steel wool, in which they showed severe damage on the surface by light rubbing.

Onto the surfaces of the above molded resin plates were uniformly dip-coated a crosslink-curable resin material consisting of 30 parts of dipentaerythritol pentaacrylate, 20 parts of dipentaerythritol tetraaacrylate, 20 parts of 2-hydroxyethyl acrylate and 4 parts of benzoin ethyl ether, using 200 parts of an isopropyl-toluene (6/4) mixed solvent. Then, the coated surfaces were exposed to ultraviolet rays emitted from a high pressure mercury lamp and were cured.

The heat-resistant resin plates obtained had on the surface a crosslink-cured film of about 3 µm thickness and were evaluated for adhesion after heating, in which the base material showed distortion and the cured film peeled easily.

Example 2

By repeating the procedures used in Example 1 except by using 1,3-dimethylurea in place of methylamine at a supply rate of 10 mole/hr, a methacrylimide-containing polymer was obtained. This polymer had an imidization degree of 45% as measured from its NMR spectrum.

The polymer had a MI of 4.3, a refractive index of 1.510, a specific gravity of 1.21 and a heat distortion temperature of 149°C.

From the polymer were produced molded resin plates by the procedure described in Example 1. These plates had a pencil hardness of H. The plates were subjected to the damage test using steel wool, in which they showed severe damage on the surface by light rubbing.

Onto the surfaces of these plates were uniformly dip-coated the crosslink-curable resin material used in Example 1. The coated surfaces were then exposed to ultraviolet rays emitted from a high pressure mercury lamp and were cured.

The heat-resistant resin plates obtained had on the surface a crosslink-cured film of about 3 µm thickness and were almost undamaged when subjected to the wear resistance test using #00 steel wool, and showed excellent abrasion resistance.

The crosslink-cured film was very hard (pencil hardness 7H), had excellent adhesion with the base material and gave a very good result in the crosscut peeling test using cellophane adhesive tape. The film had a very good mirror-like surface smoothness.

The film had also good adhesion after heating.

Example 3

Onto the surfaces of the molded resin plates obtained in Example 1 were uniformly dip-coated a crosslink-curable resin material solution consisting of the following components:

| | |
|---|---|
| Dipentaerythritol pentaacrylate | 10 parts |
| Dipentaerythritol hexaacrylate | 10 parts |
| Tetrahydrofurfuryl acrylate | 8 parts |
| Ester obtained from reaction of 1 mole of succinic acid, 2 moles of tri-methylolethane and 4 moles of acrylic acid | 7 parts |
| Isopropyl alcohol | 35 parts |
| Toluene | 30 parts |
| 2-Hydroxy-2-methyl 1-phenylpropane-1-on | 2 parts |
| Silicon type levelling agent | 6.2 parts |

The coated surfaces were exposed to ultraviolet rays emitted from a high pressure mercury lamp and were cured. The heat-resistant resin plates obtained were excellent in abrasion resistance, adhesion, adhesion after heating and surface smoothness.

Example 4

From a methyl methacrylate-methacrylic acid copolymer (weight ratio = 80/20, intrinsic viscosity = 0.45) was produced a methacrylimide-containing polymer using the imidizing substance, procedure and apparatus described in Example 1.

With this polymer, there were prepared molded plates by the procedure described in Example 1. Onto the surface of these plates were uniformly dip-coated the same crosslink-curable resin material solution as used in Example 3. The coated surfaces were exposed to ultra-violet rays emitted from a high pressure mercury lamp and were cured.

The molded resin plates obtained were excellent in heat resistance, abrasion resistance, adhesion after heating, adhesion and surface smoothness.

Example 5

By repeating the procedure described in Example 1 but using anhydrous ammonia gas (instead of methylamine) at a supply rate of 20 mole/hr, a methacrylimide-containing polymer was obtained.

This polymer had an imidization degree of 45% as measured from its NMR spectrum.

The polymer had a MI of 4.3, a refractive index of 1.530, a specific gravity of 1.230 and a heat distortion temperaure of 165°C.

Using the polymer, there were prepared molded plates by the procedure described in Example 1. The plates had a pencil hardness of H. When subjected to the damage test using steel wool, the plates were severely damaged. Onto the molded plates was uniformly dip-coated the crosslink-curable resin material of Example 1. The coated surfaces were exposed to ultraviolet rays emitted from a high pressure mercury lamp and were cured.

The heat-resistant resin plates obtained had on the surface a crosslink-cured film of about 3 µm thickness and were almost undamaged when subjected to the damage test using #00 steel wool, and showed excellent abrasion resistance.

The crosslink-cured film was very hard (pencil hardness 7H), had excellent adhesion with the base material and gave good results in the crosscut peeling test using cellophane adhesive tape and adhesion after heating. Also, the film had a very good surface smoothness.

Example 6

By repeating the procedure described in Example 1 but using urea in place of methylamine, at a supply rate of 15 mole/hr, a methacrylimide-containing polymer was obtained.

The infrared absorption spectrum of this polymer showed absorptions at 1,680 and 1,210 $cm^{-1}$ characteristic of methacrylic imide.

The polymer had a MI of 4.0 (230°C, 3.8 kg load), a refractive index of 1.536, a specific gravity of 1.237 and a heat distortion temperature of 170°C.

The imidization degree of the polymer as measured from its NMR spectrum was 53%.

Next, the polymer was subjected to extrusion molding by the use of a vent type extruder of 25 mm diameter manufactured by Daiichi Jitsugyo K.K. (die temperature: 230°C, adapter temperature: 230°C, screw barrel temperature: 200° to 230°C, full-flighted screw L/D = 24) and then pelletized. From the resulting pelletized polymer were produced heat-resistant flat molded plates 80 mm × 80 mm × 2 mm by the use of a 28 g (1 ounce) vertical injection molding machine of screw type. These plates had a pencil hardness of 2H. The plates were subjected to the damage test using steel wool, in which they showed severe damage on the surface by light rubbing.

Onto the surfaces of the molded plates were uniformly dip-coated a crosslink-curable resin material consisting of 30 parts of dipentaerythritol pentaacrylate, 30 parts of dipentaerythritol hexaacrylate, 20 parts of dipentaerythritol tetraacrylate, 20 parts of 2-hydroxyethyl acrylate and 4 parts of benzoin ethyl ether, using 200 parts of an isopropanol-toluene (6/4) mixed solvent. The coated surfaces were then exposed to ultraviolet rays emitted from a high pressure mercury lamp and were cured.

The heat-resistant resin plates obtained had on the surface a crosslink-cured film of about 3 μm thickness and were almost undamaged when subjected to the damage test using #00 steel wool and showed excellent abrasion resistance.

The crosslink-cured film was very hard, had excellent adhesion with the base material and gave a very good result in the crosscut peeling test using cellophane adhesive tape. The film had a very good mirror-like surface smoothness.

The film was also good in adhesion after heating.

Example 7

By repeating the procedure described in Example 1 except that the methyl methacrylate polymer was replaced with methyl methacrylate — methacrylic acid — tert-butyl methacrylate copolymer (weight ratio = 60/20/20, intrinsic viscosity = 0.55) and the dried methylamine was replaced with anhydrous ammonia gas and the supply rate of anhydrous ammonia gas was 20 mole/h, a methacrylimide-containing polymer was obtained.

From this polymer were prepared molded plates by the procedure described in Example 1. The surfaces of these plates were uniformly coated by dipping in the crosslink-curable resin material solution used in Example 1. The coated surfaces were exposed to ultraviolet rays emitted from a high pressure mercury lamp and were cured.

The molded plates obtained were excellent in heat resistance, abrasion resistance, adhesion, surface smoothness and adhesion after heating.

**Claims**

1. A process for producing a heat-resistant molded resin article with excellent adhesion between base material and cured film and excellent abrasion resistance, characterized by coating the surface of a molded resin article composed of

98% by weight or less of an ethylenic monomer unit, and

2% by weight or more of structural units of the formula (I)

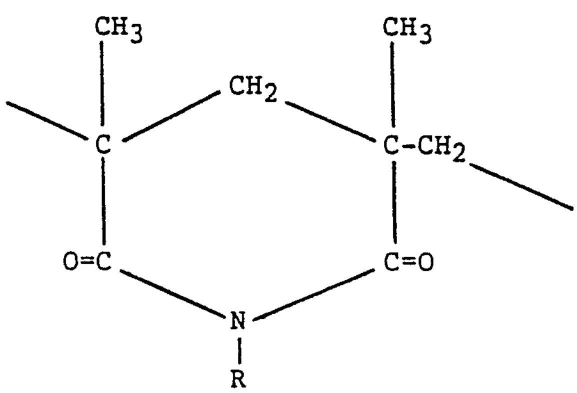

(I)

(wherein R is a hydrogen atom, a substituted or unsubstituted alkyl group, aryl group or alicyclic group of 1 to 20 carbon atoms) and consisting of a polymer obtained by reaction between a methacrylic resin and 1 to

200% by weight, based on the methacrylic resin, of a compound of the formula (II) or a urea compound which generates a compound of the formula (II)

$$R{-}NH_2 \qquad (II)$$

(wherein R has the meaning specified above) at a temperature from 100°C to less than 350°C in the presence of at least one solvent selected from aliphatic alcohols and aromatic hydrocarbons, and then freeing the reaction mixture of volatile matter, with a crosslinking-curable resin material containing 30% by weight or more of at least one monomer having three or more methacryloyloxy/and/or acryloyloxy groups per molecule, and then exposing the coated article to active energy rays to form a cured film on the molded resin article.

2. A process according to claim 1, wherein the methacrylic resin is a methyl methacrylate homopolymer or a copolymer of 25% by weight or more of methyl methacrylate and 75% by weight or less of at least one monomer selected from acrylate esters, methacrylate esters other than methyl methacrylate, acrylic acid, methacrylic acid, styrene and α-methylstyrene having an intrinsic viscosity of 0.01 to 3.0.

3. A process according to claim 1 or claim 2, wherein the compound of the formula (II) is selected from ammonia, primary amines, aromatic amines and alicyclic amines.

4. A process according to claim 3, wherein the compound of the formula (II) is methylamine.

5. A process according to any one of claims 1 to 4, wherein the monomer having three or more (meth)acryloyloxy groups per molecule is selected from poly(meth)acrylates obtained from reaction between a polyhydric alcohol and (meth)acrylic acid, polyester (meth)acrylates, urethane (meth)acrylates and poly(meth)-acryloyloxyethyl isocyanurates.

6. A process according to any one of claims 1 to 5, wherein the monomer having three or more (meth)acryloyloxy groups per molecule is a compound of the formula (III)

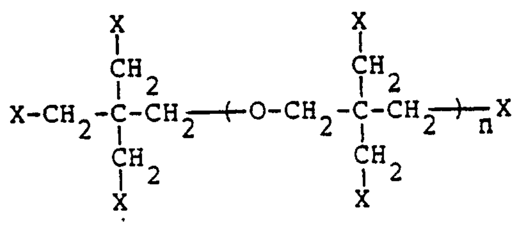 (III)

wherein *n* is an integer from 1 to 4, each of at least three of the groups X is $CH_2{=}CH{-}COO{-}$ or $CH_2{=}C(CH_3)COO{-}$ and each of the remainder (if any) of the groups X is $-OH$.

7. A process according to claim 6, wherein the compound of the formula (III) is selected from dipentaerythritol tri(meth)acrylate, dipentaerythritol tetra(meth)acrylate, dipentaerythritol penta(meth)acrylate, dipentaerythritol hexa(meth)acrylate, tripentaerythritol tri(meth)acrylate, tripentaerythritol tetra(meth)acrylate, tripentaerythritol penta(meth)acrylate and tripentaerythritol hexa(meth)acrylate.

8. A process according to any one of claims 1 to 7, wherein the crosslink-curable resin material is a mixture consisting of 30% by weight or more of at least one monomer having three or more (meth)acryloyloxy groups per molecule and 70% by weight or less of a monomer having up to two (meth)acryloyloxy groups per molecule.

9. A process according to any one of claims 1 to 8, wherein the molded resin article contains 5% by weight or more of structural units of the formula (I).

10. A process according to claim 9, wherein the molded resin article contains 10% by weight or more of structural units of the formula (I).

11. A process according to any one of claims 1 to 10, wherein the active energy rays are ultraviolet rays.

12. A process according to any one of claims 1 to 11, wherein the cured film has a thickness of 1 to 30 μm.

**Patentansprüche**

1. Verfahren zur Herstellung eines hitzebeständigen Harz-Formteils mit ausgezeichneter Haftung zwischen einem Grundmaterial und einem gehärteten Film und ausgezeichneter Abriebfestigkeit, dadurch gekennzeichnet, daß die Oberfläche eines Harz-Formteils, das aus

98 oder weniger Masse% einer ethylenischen Monomereinheit und 2 oder mehr Masse% Struktureinheiten der Formel (I)

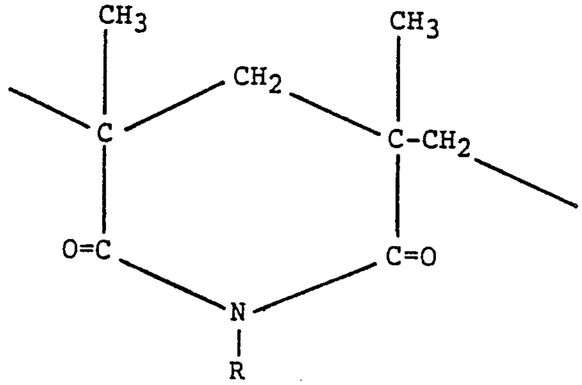

(I)

(worin R ein Wasserstoffatom, eine substituierte oder unsubstituierte Alkylgruppe, Arylgruppe oder alicyclische Gruppe mit 1 bis 20 Kohlenstoffatomen ist) zusammengesetzt ist und aus einem Polymer besteht, das durch Reaktion zwischen einem Methacrylharz und 1 bis 200 Masse%, bezogen auf das Methacrylharz, einer Verbindung der Formel (II) oder einer Harnstoffverbindung, die eine Verbindung der Formel (II)

$$R{-}NH_2 \qquad (II)$$

(worin R die vorstehend angegebene Bedeutung hat) erzeugt, bei einer Temperatur von 100°C bis weniger als 350°C in Gegenwart wenigstens eines Lösungsmittels, das aus aliphatischen Alkoholen und aromatischen Kohlenwasserstoffen ausgewählt ist, und anschließendes Befreien der Reaktionsmischung von flüchtigen Bestandteilen erhalten wird, mit einem unter Vernetzung härtbaren Harzmaterial, das je Molekül 30 oder mehr Masse% wenigstens eines Monomers mit drei oder mehr Methacryloyloxygruppen und/oder Acryloyloxygruppen enthält, beschichtet wird und das beschichtete Formteil dann Strahlen mit wirksamer Energie ausgesetzt wird, um auf dem Harz-Formteil einen gehärteten Film zu bilden.

2. Verfahren nach Anspruch 1, bei dem das Methacrylharz ein Methylmethacrylat-Homopolymer oder ein Copolymer aus 25 oder mehr Masse% Methylmethacrylat und 75 oder weniger Masse% wenigstens eines aus Acrylatestern, von Methylmethacrylat verschiedenen Methacrylatestern, Acrylsäure, Methacrylsäure, Styrol und α-Methylstyrol ausgewählten Monomers ist, das eine Grenzviskosität von 0,01 bis 3,0 hat.

3. Verfahren nach Anspruch 1 oder Anspruch 2, bei dem die Verbindung der Formel (II) aus Ammoniak, primären Aminen, aromatischen Aminen und alicyclischen Aminen ausgewählt ist.

4. Verfahren nach Anspruch 3, bei dem die Verbindung der Formel (II) Methylamin ist.

5. Verfahren nach einem der Ansprüche 1 bis 4, bei dem das Monomer, das je Molekül drei oder mehr (Meth)acryloyloxygruppen hat, aus Poly(meth)acrylaten ausgewählt ist, die durch Reaktion zwischen einem Polyalkohol und (Meth)acrylsäure, Polyester(meth)acrylaten, Urethan(meth)acrylaten und Poly(meth)acryloyloxyethylisocyanuraten erhalten werden.

6. Verfahren nach einem der Ansprüche 1 bis 5, bei dem das Monomer, das je Molekül drei oder mehr (Meth)acryloyloxygruppen hat, eine Verbindung der Formel (III) ist

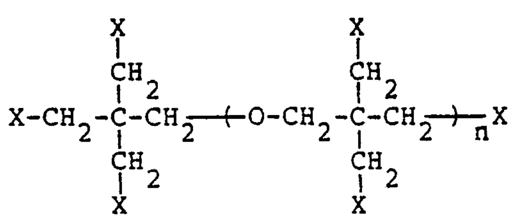

(III)

worin n eine ganze Zahl von 1 bis 4 ist, wobei jede von wenigstens dreien der Gruppen X $CH_2{=}CH{-}COO{-}$ oder $CH_2{=}C(CH_3)COO{-}$ ist und jede der restlichen Gruppen X (falls solche verhanden sind) —OH ist.

7. Verfahren nach Anspruch 6, bei dem die Verbindung der Formel (III) aus Dipentaerythrittri(meth)-acrylat, Dipentaerythrittetra(meth)acrylat, Dipentaerythritpenta(meth)acrylat, Dipentaerythrithexa(meth)-acrylat, Tripentaerythrittri(meth)acrylat, Tripentaerythrittetra(meth)acrylat, Tripentaerythritpenta(meth)-acrylat und Tripentaerythrithexa(meth)acrylat ausgewahlt ist.

8. Verfahren nach einem der Ansprüche 1 bis 7, bei dem das unter Vernetzung härtbare Harzmaterial eine Mischung ist, die aus 30 oder mehr Masse% wenigstens eines Monomers mit drei oder mehr (Meth)-acryloyloxygruppen je Molekül und 70 oder weniger Masse% eines Monomers mit bis zu zwei (Meth)acryloyloxygruppen je Molekül besteht.

9. Verfahren nach einem der Ansprüche 1 bis 8, bei dem das Harz-Formteil 5 oder mehr Masse% Struktureinheiten der Formel (I) enthält.

10. Verfahren nach Anspruch 9, bei dem das Harz-Formteil 10 oder mehr Masse% Struktureinheiten der Formel (I) enthält.

11. Verfahren nach einem der Ansprüche 1 bis 10, bei dem die Strahlen mit wirksamer Energie Ultraviolettstrahlen sind.

12. Verfahren nach einem der Ansprüche 1 bis 11, bei dem der gehärtete Film eine Dicke von 1 bis 30 µm hat.

**Revendications**

1. Un procédé pour la production d'un article moulé en résine résistant à la chaleur, présentant une excellente adhérence entre un matériau de base et une pellicule durcie et une excellente résistance à l'abrasion, caractérisé en ce qu'on revêt la surface d'un article moulé en résine, constitué de

98% en poids ou moins de motifs d'un monomère éthylénique, et

2% en poids ou plus de motifs structuraux de la formule (I)

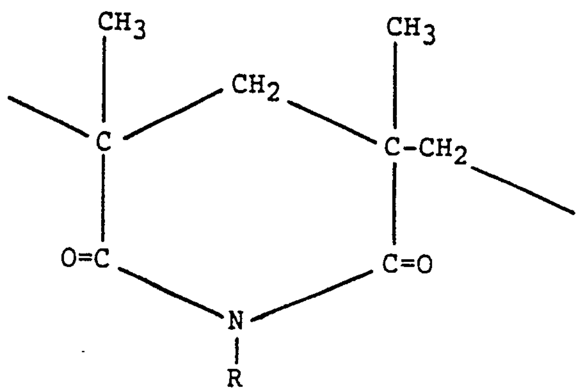

(I)

(dans laquelle R est un atome d'hydrogène ou un groupe alkyle, un groupe aryle ou un groupe alicyclique de 1 à 20 atomes de carbone, substitué ou non substitué) et consistant en un polymère obtenu en faisant réagir une résine méthacrylique et 1 à 200% en poids, par rapport à la résine méthacrylique, d'un composé de la formule (II) ou d'un composé du type urée qui engendre un composé de la formule (II)

$$R—NH_2 \qquad (II)$$

(dans laquelle R a la signification spécifiée ci-dessus) à une température de 100°C à moins de 350°C en présence d'au moins un solvant choisi parmi les alcools aliphatiques et les hydrocarbures aromatiques, puis en débarrassant le mélange réactionnel de la matière volatile, avec une résine durcissable par réticulation contenant 30% en poids ou plus d'au moins un monomère ayant trois ou plus de trois groupes méthacryloyloxy et/ou acryloyloxy par molécule, puis on expose l'article revêtu à des rayons à énergie active pour former une pellicule durcie sur l'article moulé en résine.

2. Un procédé selon la revendication 1, dans lequel la résine méthacrylique est un homopolymère de méthacrylate de méthyle ou un copolymère de 25% en poids ou plus de méthacrylate de méthyle et 75% en poids ou moins d'au moins un monomère choisi parmi les esters d'acide acrylique, les esters d'acide méthacryliques autres que le méthacrylate de méthyle, l'acide acrylique, l'acide méthacrylique, le styrène et le α-méthylstyrène, ayant une viscosité intrinsèque de 0,01 à 3,0.

3. Un procédé selon la revendication 1 ou la revendication 2, dans lequel le composé de formule (II) est choisi parmi l'ammoniac, les amines primaires, les amines aromatiques et les amines alicycliques.

4. Un procédé selon la revendication 3, dans lequel le composé de formule (II) est la méthylamine.

5. Un procédé selon l'une quelconque des revendications 1 à 4, dans lequel le monomère ayant trois ou plus de trois groupes (méth)acyloyloxy par molécule est choisi parmi les poly(méth)acrylates obtenus par réaction entre un polyalcool et l'acide (méth)acrylique, les polyester-(méth)acrylates, les uréthanne-(méth)-acrylates et les poly[(méth)acryloyloxyéthyl]isocyanurates.

6. Un procédé selon l'une quelconque des revendications 1 à 5, dans lequel le monomère ayant trois ou plus de trois groupes (méth)acryloyloxy par molécule est un composé de la formule (III)

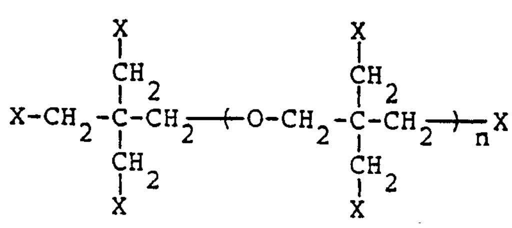

(III)

dans laquelle *n* est un nombre entier de 1 à 4, chacun d'au moins trois des groupes X est $CH_2$=CH—COO— ou $CH_2$=C($CH_3$)COO—, et le ou chacun des groupes X restants (le cas échéant) est —OH.

7. Un procédé selon la revendication 6, dans lequel le composé de la formule (III) est choisi parmi le tri(méth)acrylate de dipentaérythritol, le tétra(méth)acrylate de dipentaérythritol, le penta(méth)acrylate de dipentaérythritol, l'hexa(méth)acrylate de dipentaérythritol, le tri(méth)acrylate de tripentaérythritol, le tétra(méth)acrylate de tripentaérythritol, le penta(méth)acrylate de tripentaérythritol et l'hexa(méth)-acrylate de tripentaérythritol.

8. Un procédé selon l'une quelconque des revendications 1 à 7, dans lequel la résine durcissable par réticulation est un mélange constitué de 30% en poids ou plus d'au moins un monomère comportant trois ou plus de trois groupes (méth)acryloyloxy par molécule et 70% en poids ou moins d'un monomère comportant au plus deux groupes (méth)acryloyloxy par molécule.

9. Un procédé selon l'une quelconque des revendications 1 à 8, dans lequel l'article moulé en résine contient 5% en poids ou plus de motifs structuraux de formule (I).

10. Un procédé selon la revendication 9, dans lequel l'article moulé en résine contient 10% en poids ou plus de motifs structuraux de formule (I).

11. Un procédé selon l'une quelconque des revendications 1 à 10, dans lequel les rayons à énergie active sont des rayons ultraviolets.

12. Un procédé selon l'une quelconque des revendications 1 à 11, dans lequel l'épaisseur de la pellicule durcie est de 1 à 30 µm.

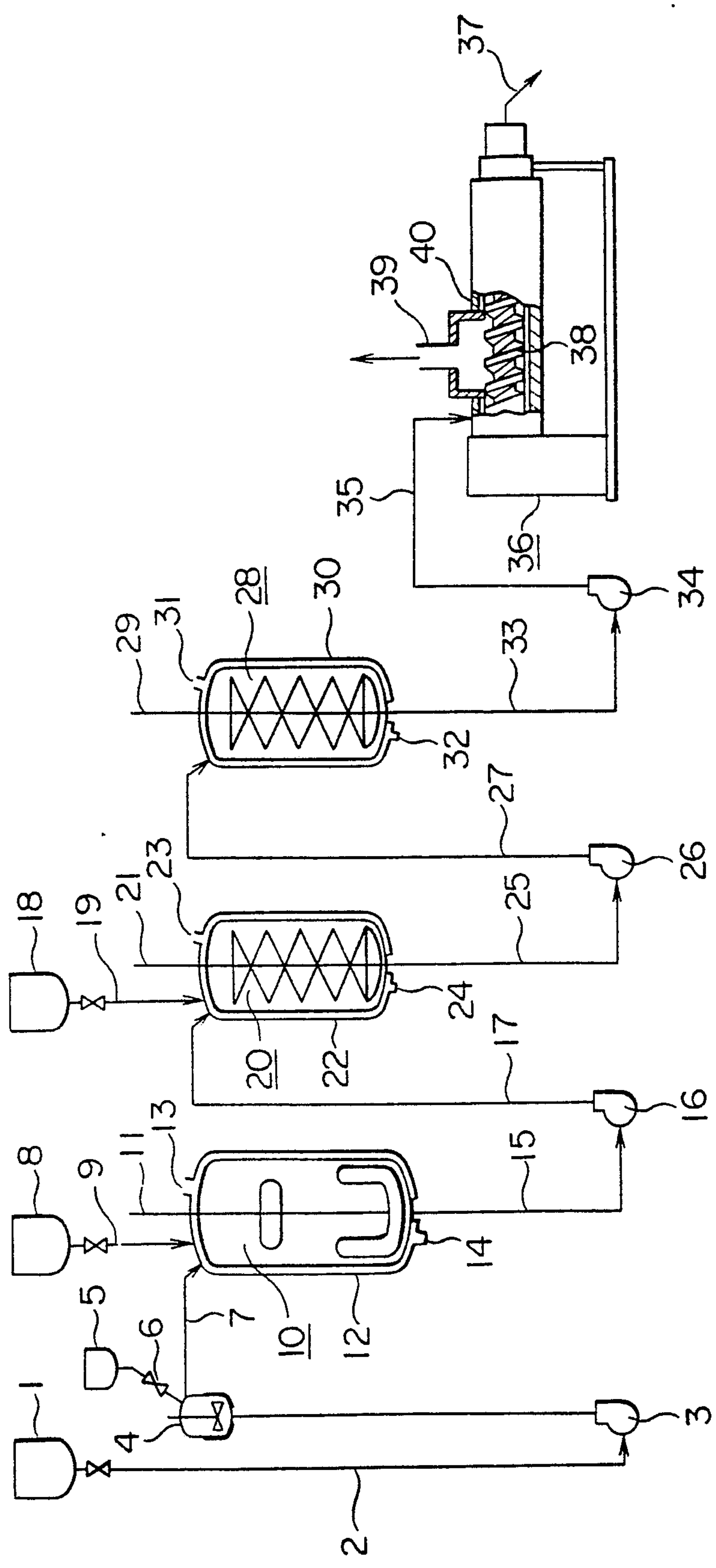
1
2
3
4
5
6
7
8
9
10
11
12
13
14
15
16
17
18
19
20
21
22
23
24
25
26
27
28
29
30
31
32
33
34
35
36
37
38
39
40